# EUROPÄISCHE PATENTSCHRIFT

(11) **EP 1 608 494 B1**
(45) Veröffentlichungstag und Bekanntmachung des Hinweises auf die Patenterteilung: **09.03.2011**
(21) Anmeldenummer: 04700444.5
(22) Anmeldetag: 07.01.2004
(51) Int. Cl.: B27N 3/18

(54) **VORRICHTUNG ZUM BEDAMPFEN**
VAPOUR DEPOSITION DEVICE
DISPOSITIF DE VAPORISATION

(30) Priorität: 01.04.2003 DE 20305236 U
(43) Veröffentlichungstag der Anmeldung: 28.12.2005
(73) Patentinhaber: Kronoplus Technical AG, 9052 Niederteufen (CH)
(72) Erfinder: STUTZ, Josef, CH-9052 Niederteufen (CH)
(74) Vertreter: Heselberger, Johannes
(86) Internationale Anmeldenummer: PCT/EP2004/000033
(87) Internationale Veröffentlichungsnummer: WO 2004/087388

(56) Entgegenhaltungen:
- DE-A- 2 058 820
- DE-A- 4 208 263
- DE-A- 19 701 595
- US-A- 5 063 010
- US-A- 5 433 905
- US-A1- 2002 036 046

## Beschreibung

Die Erfindung betrifft eine Vorrichtung zum Bedampfen einer Fläche.

Erfindung bezieht sich Insbesondere auf aus Holzfasern gefertigte Platten.

Ein typisches, bekanntes Produktionsverfahren für die Herstellung einer Platte, die aus Holzfasern hergestellt wurde, ist aus der Fachzeitschrift HK 1/88, Seiten 74 bis 75, "Herstellung von MDF-Platten", bekannt. Gekochte Hackschnitzel werden einem sogenannten Refiner zugeführt, Im Refiner werden die Holzschnitzel zu Fasern verarbeitet und zwar unter Zuführung von Temperatur und Druck mit Hilfe von Malscheiben, Aus dem Refiner werden die Fasern mit Hilfe von Dampf heraustransportiert und mittels einer "Blow-line" genannten Leitung weitergeleitet. Der Dampfdruck beträgt dabei ca, 10 bar, Die Temperatur liegt bei ca. 150 bis 160 °C. In der "Blow-Line" wird Leim zugefügt. Als Leim werden Phenolharze, Harnstoffharze oder Mischharze aus Harnstoff und Melamin eingesetzt. Im Anschluss an die Zugabe vom Leim weitet sich die "Blow-Line" auf. Eine Verwirbelung wird durch die Aufweitung bewirkt. Der Leim vermischt sich mit den Fasern. Der Leimanteil liegt im Verhältnis zu den Fasern bei ca. 22 Gew.-%.

Die mit Leim versehenen Fasern werden schichtförmig einer Formmaschine zugeführt. Vorteilhafterweise werden die Fasern In zwei Phasen gepresst. Zunächst findet optional eine Vorpressung statt. Die vorgepressten Fasern werden anschließend unter Anwendung von hohem Druck und Zufuhr von Wärme zur Platte verpresst.

Eine Beleimungseinrichtung für die Produktion von Faserplatten ist aus der Druckschrift EP 0 744 259 A2 bekannt. Ein Verfahren zur Herstellung von Platten aus einem Holzwerkstoff ist der Druckschrift US 5,554,330 zu entnehmen. Die Druckschrift GB 791,554 offenbart ein Verfahren zum Mischen von festen und flüssigen Bestandteilen. Eine Vorrichtung zur kontinuierlichen Beleimung von Holzspänen geht aus der Druckschrift DE 41 15 047 C1 hervor. Kontinuierliches Mischen von span- und faserartigen Stoffen mit Bindemitteln ist der Druckschrift DE-OS 1956 898 zu entnehmen. Die Gewinnung von Leim aus Holzbestandteilen sind den Druckschriften PCT/IB98/00607 sowie WO 98/37147 zu entnehmen.

Verfahren zum Verringern der Presszeiten durch Vorwärmung funktionieren wie folgt:

Bevor das mit Leim versehene Fasermaterial zur Herstellung von MDF-Platten oder dergleichen in eine Doppelbandpressanlage gelangt, wird es vorgepresst. Hierzu gibt es zwei Transportbänder, die übereinander angeordnet sind, Das Material, welches vorgepresst wird, gelangt zu diesem Zweck zwischen die beiden Transportbänder. Die Transportbänder weisen Maschen oder Löcher auf, durch die heißer Dampf hindurchgeleitet wird. Der heiße Dampf gelangt dann in die Oberflächenbereiche des vorgepressten Materials. Hierdurch wird erreicht, dass das Material vorgeheizt wird, Die Vorheizung hat zur Folge, dass die eigentlichen Prozesszeiten weiter reduziert werden können. In dem Feuchte in das Material eingebracht wird, kann darüber hinaus während des Pressens Temperatur mittels der Feuchte stärker bzw. verbessert, d. h. schneller in das Innere des Materials gelangen. Das Vorbedampfen erhöht also die Wärmeleitfähigkeit der Pressgutmatte.

Ein weiterer Vorteil des Bedampfungsverfahrens ist, dass härtere Deckschichten ohne den Einsatz von relativ viel Holz erzielt werden können. Wird gezielt die Oberfläche bedampft oder befeuchtet und bleibt der Innenbereich (Kern) relativ trocken währen des Pressens, so werden gezielt die Oberflächen gepresst und gehärtet, Feuchtes Material lässt sich besser pressen als trockenes Material. Hierdurch wird also erreicht, dass gezielt Oberflächenbereiche verdichtet und somit härter werden.

Vorbedampfungsverfahren offenbaren die Druckschriften DE-OS 44 41 017, US 11 17 95 sowie die dänische Patentanmeldung Nr. 0302/97.

DE-OS 20 58 820 offenbart die Anwendung von heißen Gasen in kontinulerlich arbeitenden Pressen. Der überhitzte Dampf wird durch gasdurchlässige siebartige Bänder dem Pressgut zugeführt, wobei die Gaszuführung Innerhalb der Härte- und Kalibrierzone, d, h., im Hochverdichtungsbereich der kontinuierlich arbeitenden Hauptpresse erfolgt, Die gasdurchlässige Bandstruktur hinterlässt auf den Oberflächen der hergestellten Span- bzw, Faserplatten eine markierte Oberflächenstruktur, die aufwendig nachträglich abgeschliffen werden muss.

DE-PS 39 14 106 betrifft eine Pressgutmatten-Vorwärmung mittels Dampfstoß, die nicht perforierte, sondern glatte Stahlbänder verwendet. Daher treten auf den fertig gepressten Platten keine Oberflächenmarkierungen auf. Nachteilig ist jedoch, dass die Wärmeeinbringung In die Pressgutmatten wegen der dampfundurchlässigen Stahlbänder verringert ist, was längere Presszeiten verursacht.

DE 44 41 017 A1 betrifft ebenfalls eine Anlage zur kontinuierlichen Herstellung von Heizwerkstoffplatten, bei dem eine Pressgutmatte durch ein dampfdurchlässiges Siebband während des Durchpressens durch senkrecht zum Siebband aufgebrachte Dampfstöße vorgewärmt wird. Dies kann jedoch dazu führen, dass vom Dampfstoß Fasern aus der Pressgutmatte ausgeblasen werden, wodurch die Oberflächenqualität der fertig bearbeiteten Faserplatte sich verringert und die Vorrichtung verschmutzt.

Die Veröffentlichungsschrift DE 39 14 106 A1 beschreibt eine Bandpresse zur Herstellung von Sperrholzplatten, bei der eine Fasermatte aus Holzschnitzeln zwischen zwei umlaufenden Pressbändern verpresst wird. Hierzu soll die Fasermatte vorab von Raumtemperatur auf eine Temperatur zwischen 50 und 80°C erhitzt werden und zudem soll der Feuchtigkeitsgehalt dieser Fasermatte erhöht werden. Gemäß der D2 erfolgt dies durch die Zuführung von heißem Wasserdampf beim Eingang in die Bandpresse. Dies erfolgt über schräge Strömungskanäle die in feststehenden Platten einer Vorheiz -und Feuchtigkeitskorrektureinheit eingerichtet sind.

Die DE 20 588 20 betrifft ebenfalls ein Verfahren zum Herstellen von Holzwerkstoffplatten aus einer Masse, die Holzteilchen und wärmehärtendes Kunststoffbindematerial enthält. Die vorverdichtete Masse soll zur Plastifizierung mit überhitztem Dampf beaufschlagt werden und anschließend in einer Presseinrichtung auf ihre Enddichte fertig gepresst werden.

Aufgabe der Erfindung ist die Schaffung eines verbesserten, schneller durchführbaren und preiswerteren Verfahrens zur Herstellung einer Platte der eingangs genannten Art bzw. genauer gesagt Bereitstellung einer zugehörigen Vorrichtung

Erfindungsgemäß wird vorgeschlagen, bei einer Vorrichtung zum Bedampfen einer relativ zur Vorrichtung bewegten Fläche den Dampfstoß nicht senkrecht, sondern unter einem Winkel schräg zur Ebene der Fläche auszustoßen. Wenn der Dampfstoß nicht senkrecht auf die Fläche, die beispielsweise aus auf einem Transportband liegenden vorbeleimten Fasern besteht, trifft, werden weniger Fasern aus dem sogenannten Faservlies, Faserkuchen oder der Pressgutmatte herausgeblasen. Der Materialverbrauch sinkt, die Oberflächenqualität des fertig bearbeiteten Produktes steigt und eine Verunreinigung der Arbeitsmittel durch herumfllegende ausgeblasene Fasern wird vermindert. Die Dampfaustrittsöffnungen dienen dazu, um den aus einem Reservoir zur Fläche geleiteten Dampf beschleunigen und richtungsmäßig zu orientieren.

Eine Fläche im Sinne der Erfindung ist die Ober- oder Unterseite des Faservlieses, welches der Presse, insbesondere der Kalanderpresse, zugeführt wird. Ein Winkel ist dann schräg im Sinne der Erfindung, wenn er größer als 0° und kleiner als 90° in irgendeiner Richtung zur Ebene der Fläche ist. Versuche haben gezeigt, dass ein Winkel von mindestens 20°, maximal 60° besonders günstige Ergebnisse liefert. Günstige Ergebnisse liegen dann vor, wenn im Vergleich zum senkrecht auftreffenden Dampfstoß die Menge der ausgeblasenen Fasern bzw. die Verformung der Oberfläche zurückgeht und dennoch ein Einleiten von heißem Dampf in das Faservlies, welches eine Reduzierung der Presszeiten ermöglicht, gewährleistet ist. Als Ausblasrichtung des Dampfstoßes kommt daher jede Ausblasrichtung in Betracht, d. h. beispielsweise entgegen oder quer zur Förderrichtung der bewegten Fläche. Durch Versuche wurde herausgefunden, dass je schneller das Festband umläuft, also die Fläche sich relativ zum Dampfkopf bewegt, desto kleiner kann der Winkel sein kann. Beisplelsweise kann bei Kalanderpressen besonders gute Ergebnisse erzielt werden, bei einem Winkel von 45° bis 60°, insbesondere ca, 53° bei einer Fördergeschwindigkeit von 55 m/min und 20° bis 40°, insbesondere zur 30° bei 60 bis 70 m/mln Fördergeschwindigkeit.

Zu große, das heißt steile Winkel führen zu Streifen und Ausspülungen oder Dellen, da lose Fasern, die nicht mehr mit Leim versehen sind abgespült werden können,

Es ist bevorzugt, dass der Dampfstoß entgegen der Förderrichtung der Fläche ausgeblasen wird. Dadurch erhöht sich die Relativgeschwindigkeit der Dampfpartikel zur Fläche, wodurch die Eindringtiefe des Dampfes sich vergrößert. Dadurch steigt die Energiedichte pro Flächeneinheit der Fläche, Dies bewirkt zum einen eine größere Energieeinbringung, d. h. Vorwärmung in die Randbereiche der Fläche und zum anderen eine dickere oberflächennahe Schicht mit durch die eingedrungene Feuchtigkeit verbesserte Wärmeleitfähigkeit. Dadurch kann in der Hauptpresse die zum Aushärten benötigte Wärme schneller und tiefer in die Fläche eingebracht werden.

Eine weitere Reduktion der Presszeiten ergibt sich, wenn die Fläche von beiden Seiten bedampft werden kann.

Das erfindungsgemäße Vorsehen der Dampfaustrittsöffnung an einer schwenkbaren Dampfnase bzw. -fläche hat den Vorteil, dass der Ausblaswinkel einfach variiert werden kann. Schwenkbar bedeutet zum einen, dass beispielsweise im Betrieb der Anlage der jeweils optimale Ausblaswinkel zur Erzielung eines bestimmten Arbeitsergebnisses eingestellt werden kann, beispielsweise bei der Umstellung von 10 mm zu 20 mm Platten oder bei veränderten Binderantellen. Schwenkbar bedeutet andererseits auch, dass beispielsweise bei der Montage der Vorrichtung einmalig ein auf den Anwendungsfall bezogener Ausblaswinkel, der nachher nicht mehr verändert wird, eingestellt werden kann. Für den Hersteller derartiger Vorbedampfungsvorrichtungen ergibt sich daraus der Vorteil, dass er nicht verschiedene Varianten von Dampfnasen für unterschiedliche Anwendungsfälle bereithalten muss, sondern eine einzige Standarddampfnase verwenden kann.

In einer Ausgestaltung ist die Schwenkachse der Dampfnase so vorgesehen, dass lediglich ein Variieren des Winkels entgegen der Richtung der bewegten Fläche möglich ist. Dadurch verringert sich der Montageaufwand und Fehlbedienungen werden vermieden.

Eine Ausgestaltung sieht Bewegungsmittel zum Variieren der Ausblasrichtung des Dampfstoßes vor. Dadurch erhöht sich die Flexibilität der Vorbedampfungsvorrichtung, da bequem mittels Steuerungsmitteln, beispielsweise Computer oder Potentiometer, auf veränderte Bearbeitungsaufgaben reagiert werden kann. Die Steuerungsmittel steuern die Bewegungsmittel. Wenn beispielsweise auf einem Potentiometer eine Gradzahl von 30° eingestellt wird, so sorgen die Steuerungsmittel dafür, dass die Bewegungsmittel die Dampfaustrittsöffnungen so einstellen, dass der Dampfstoß unter einem Winkel von 30° auf die Fläche trifft.

Die Steuerungsmittel können auch so wirken, dass sie mittels Versuchen bestimmte Ergebnisse wiederspiegeln, Beispielsweise kann ein Potentiometer eine Skala mit unterschiedlichen Relativgeschwindigkeiten aufweisen. Beim Einstellen einer bestimmten Relativgeschwindigkeit auf der Skala werden dann die Bewegungsmittel so gesteuert, dass der durch Versuche bestimmte optimale Winkel für den Dampfstoß eingestellt wird.

Die Steuerungsmittel können natürlich auch mehrere Parameter berücksichtigen, beispielsweise die Relativgeschwindigkeit und die Dicke der Fläche. Die Steuerungsmittel können auch so realisiert werden, dass der Benutzer in einer Tabelle den optimalen Winkel nachschlägt und anschließend diesen direkt einstellt, Eine derartige Tabelle kann auch auf einem Computer hinterlegt sein, sodass Fehlbedienungen vermieden werden,

In einer weiteren Ausgestaltung sind darüber hinaus Sensoren vorgesehen, die zumindest die Relativgeschwindigkeit und/oder Dicke der Fläche ermitteln, was ebenfalls Fehlinterpretationen durch Menschen verhindert. Darüber hinaus hat der Einsatz von Sensoren den Vorteil, dass die Steuerungsmittel die zum Ansteuern des optimalen Winkels notwendigen Parameter ohne die Gefahr von menschlichem Versagen fehlerfrei übermittelt erhalten. Dadurch ist eine kontinuierliche Optimierung des Prozesses gewährleistet. Während normalerweise bei der Produktion die Parameter, wie Geschwindigkeit und Dicke der Fläche konstant bleiben, kann es im Versuchsbetrieb von großem Nutzen sein, wenn der Dampfstoß permanent optimiert wird, z. B. wenn aus Versuchsgründen laufend Parameter, wie z. B. Dicke, Zusammensetzung oder Geschwindigkeit variiert werden.

In einer weiteren Ausgestaltung wird vorgeschlagen, eine Vielzahl von Parametern bei der Ermittlung des optimalen Winkels zu berücksichtigen, insbesondere Bandgeschwindigkeit, Anpressdruck von der Presswalze, insbesondere bei Kalanderpressen.

Eine weitere Ausgestaltung sieht vor, dass die Fläche ein Faservlies zur Herstellung eines plattenförmigen Bauelements, insbesondere eine Holzfaser-Holzspan-MDF- oder -HDF-Platte ist. Derartige Platten können nämlich mit dem erfindungsgemäßen Verfahren besonders wirtschaftlich hergestellt werden, da sich durch das optimierte Vorbedampfungsverfahren ohne die sonst üblichen Nachteile die Presszeit von 7 auf 3,2 Sek./mm-Plattendicke halbieren lässt.

Synchron mit der Fläche mitgeführte Siebbänder erleichtern die Vorverdichtung des Faservlieses, fördern das Faservlies in Richtung auf die Presse, sind teildurchlässig für den Dampfstoß und halten dabei das Faservlies in Form, Die Maschenweite ist in Abhängigkeit von dem herzustellenden Produkt so zu wählen, dass hinreichend Dampfdurchlässigkeit gegeben ist, ohne dass es zu Ausspülungen bzw, Ausblasen von Fasern durch den Wasserdampf kommt. Eine Maschenweite von 1/10 bis 5/10 sorgt dafür, dass die Lochgröße einerseits so fein ist, dass die Fasern nicht hindurch können und das Sieb die Matte transportieren und führen kann. Zugleich dient sie der Befeuchtung durch den Dampf.

Siebbänder auf der Ober- und Unterseite der Fläche ermöglichen eine gesteigerte Vorwärmung der Fläche. Siebbänder im Sinne der Erfindung sind alle die Mittel, die geeignet sind, die zuvor genannten Wirkungen zu erzielen, also auch dampfdurchlässige Gewebebänder.

Durch Absaugeinrlchtungen zum Entfernen von Rückstanden an den Siebbändern wird ein Zusetzen des Löcher vermieden und eine gleichmäßige Wirkung des Dampfs gewährleistet. Daher ist vorteilhaft zu beiden Seiten des Bandes eine Absaugung vorgesehen.

In einer weiteren Ausgestaltung werden dem Dampf Zusatzstoffe hinzugegeben, um so die Oberflächeneigenschaften der aus den Fläche durch Pressen hergestellten Platten gezielt zu verändern. Durch Zugabe von Substanzen kann die Oberfläche beispielsweise besser gehärtet werden, Hierdurch ergeben sich u.a. die positiven Trittschalleigenschaften. Darüber hinaus ist eine harte Oberfläche bei einem Fußboden stets von Interesse. Auch können die Quelleigenschaften gezielt durch Zusatzstoffe reduziert werden. Je geringer die Quellung ist, so stabiler bzw, resistenter gegenüber Feuchtigkeit ist die zur Platte ausgepresste Fläche. Bei dünnen Platten, das heißt Platten mit einer Dicke unter 5 mm, können die Zusatzstoffe Substanzen auf Sulfatbasis enthalten. Diese beschleunigen die Oberflächenaushärtung, insbesondere verursacht durch das Sulfat, Bei dünnen Platten wirken Chloride zu schnell, wobei nachteilhaft Salzsäure entstehen kann.

Bei dickeren Platten, also solchen mit einem Querschnitt von größer als 5 mm, werden dagegen Substanzen auf Chloridbasis eingesetzt, wobei insbesondere das Chlorid beschleunigend wirkt. Es wurde herausgefunden, dass der Einsatz von Chlorid bei den geringen Geschwindigkeiten einer Kalanderpresse besonders vorteilhaft ist. Eine Geschwindigkeit von weniger als 30 m/min wird als gering angesehen.

Als Zusatzstoffe können ferner Netzmittel, beispielsweise Spülmittel, Pril ® zur. Reduzierung der Oberflächenspannung eingesetzt werden. Die bessere Vernetzung der Vollständigkeit in der Oberfläche sorgt für eine verbesserte Verdichtung im Oberflächenbereich und damit eine glattere Oberfläche.

Eine verbesserte Verdichtung der Deckschicht kann ferner durch Silikon bewirkt werden, welches insbesondere im verflüssigten Zustand dem Wasserdampf zugefügt werden kann.

Dadurch, dass die Zusatzstoffe dem Dampf hinzugegeben werden, nimmt die Konzentration in der Fläche mit zunehmenden Abstand zur Oberfläche ab, weil hauptsächlich im oberflächennahen Raum vorhanden, eingesetzt werden.

Die vorgeschlagene Vorbedampfungsvorrichtung bzw, das Verfahren ist also besonders gut für die Herstellung von plattenförmigen Holzbauteilen geeignet, die vorzugsweise durch Pressen, beispielsweise Kalanderpressen, hergestellt werden. Hier wird erfindungsgemäß eine Reduktion der Presszeiten um 50 % erzielt.

Wenn das Vorbedampfen unmittelbar vor dem Pressen der Fläche erfolgt, kühlt die Fläche vor dem Pressvorgang nur unwesentlich ab, Je höher die Temperatur der Fläche vor dem Pressen, desto schneller kann der Pressvorgang durchgeführt werden, Ein unmittelbar vor dem Pressen erfolgtes Bedampfen ist also so zu verstehen, dass die durch das Vorbedampfen in die Fläche eingebrachte Energie nur in sehr geringem Maße vor dem Pressen an die Umgebung wieder abgegeben werden kann, Die Vorbedampfungsvorrichtung muss sich vor der Presse befinden, da in der Presse, die in der Regel mit dampfundurchlässigen Stahlbändern arbeitet, kein Dampf durch die Bänder hindurchdringen kann. Die Verwendung von perforierten Bändern verbietet sich, da dadurch keine glatte Oberfläche herstellbar ist.

Laminatpaneele erfreuen sich zur Zeit besonders als Fußbodenbelag immer größerer Beliebtheit und werden daher in großen Stückzahlen gefertigt, Es handelt sich dabei um eine Platte, die besonders wirtschaftlich erfindungsgemäß hergestellt werden kann, die mit einer Dekorschicht, beispielsweise Echtholz oder Druck, auf der Oberseite sowie einer abriebfesten Schicht oberhalb der Dekorschicht, sowie einem Gegenzugpapier unterhalb der Platte versehen wird.

Eine weitere Reduktion der Presszeiten ergibt sich, wenn die Fläche von beiden Seiten bedampft werden kann.

Weitere Vorteile ergeben sich aus der folgenden Beschreibung und der beigefügten Zeichnung, Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter, dabei zeigt

Das Vorpressen unter 90° den Vorteil, dass das bindemittel nicht verfrüht aushärtet.

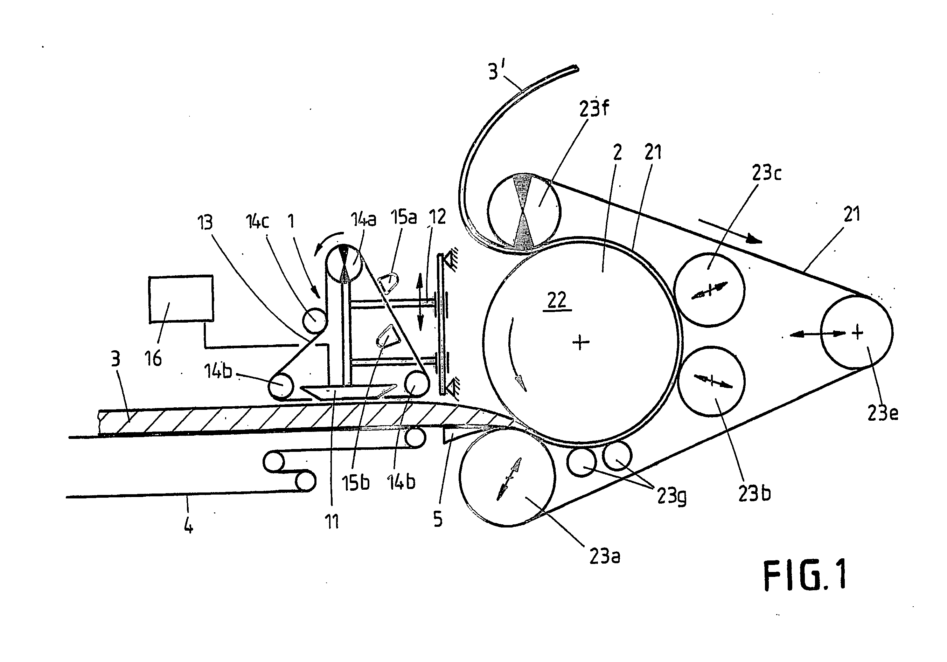

Fig. 1: eine Skizze einer Kalanderpresse mit vorgeschalteter erfindungsgemäßer Bedampfungsstation.

Die Vorrichtung bzw. das Verfahren kann wie folgt ausgestaltet sein bzw. durchgeführt werden:

Die vorbeleimten Fasern werden einem oder mehreren nicht dargestellten Abscheideeinrichtungen zugeführt. Von den Abscheideeinrichtungen gelangen die vorbeleimten Fasern zu einer nicht dargestellten Streustation. Die Streustation gibt die vorbeleimten Fasern auf ein Transportband. Das Transportband führt die Fasern zu einer nicht dargestellten Vorpresse. Hier werden die Fasern typischerweise zu 2/3 vorgepresst, Die Vorpresse umfasst nicht dargestellte umlaufende Bander, zwischen die die Fasern zugeführt und dabei in eine Fasernatte bzw. Faserfläche gepresst werden, Anschließend durchlaufen die Fasern eine nicht dargestellte Formstrasse, die über die diverse Einrichtungen verfügt, die sicherstellen, dass die Fasern in der gewünschten Form vorliegen. Die Formstrasse führt die Faserfläche in die erfindungsgemäße Bedampfungseinrichtung 1 aus Fig. 1. Hier werden die Fasern von oben schräg bedampft. Die Fasern können auch parallel zum Transportband geteilt und so im "Inneren" bedampft werden, was in Fig. nicht dargestellt ist. Die Bedampfungsvorrichtung 1 ist aus Gründen der Übersichtlichkeit nur auf der Oberseite der Fläche 3 angeordnet und kann natürlich auch gleichzeitig an der Flächenunterseite vorsehen sein.

Die Bedampfungsvorrichtung 1 besteht im wesentlichen aus einer mittels eines Antriebs 12 absenkbaren Dampffläche oder -nase 11 aus der an der Unterseite Dampf strömen kann. Um die noch weiche Oberfläche der in Fig. 1 nach rechts geführte Fläche 3 durch den Dampfkopf nicht zu beschädigen, ist ein umlaufendes Band 13 zwischen Dampffläche 11 und Fläche 3 geschaltet, welches sich synchron mit der bewegten Fläche 3 bewegt. Das umlaufende Band 13 hat Löcher für den Durchtritt des Dampfes und wird über die Antriebswalze 14a, Umlenkwalze 14b und Spann- bzw. Umlenkwalze 14c geführt und gespannt.

Dabei ist entscheidend, dass keine Relativbewegung zwischen Fläche 3 und den ruhenden Elementen, beispielsweise Dampffläche 11 oder umlaufendes Siebband 13 stattfindet. Die Stelleinrichtung 12 ermöglicht Anpassung an unterschiedliche Plattenquerschnitte und Geometrien und kann sogar für eine gewisse Verdichtung der Matte eingesetzt werden. Das Zuführband 4 auf der Unterseite bewegt sich naturgemäß mit der Fläche und kann bei Einsatz einer Vorbedampfungseinrichtung an der Unterseite der Fläche 3 ebenfalls als Siebband ausgeführt sein.

Absaugevorrichtungen 15a und 15b beiderseits des umlaufenden Siebbandes 13 der Vorbedampfungseinrichtung bewirken eine Reinigung desselben von Fasern oder Spänen und vergleichbaren Ablagerungen, um ein Zusetzen der Poren bzw. Unregelmäßigkeiten in der Plattenoberfläche zu verhindern.

An der Vorbedampfungseinrichtung können verschiedene Sensoren vorgesehen, die mit einer zentralen Steuerung 16 verbunden sind. Diese Steuerung regelt die Dampfzufuhr, Dampftemperatur, Vorschubgeschwindigkeit des Siebbandes 13 und die Stelleinrichtung 12 in Abhängigkeit von dem gewünschten Arbeitsergebnis der Plattendicke und dem Plattenmaterial.

Die derart vorverdichtete Fasermatte 3 verläßt nach dem Bedampfen das Zuführband 4 und wird über einen Tisch 5 in die Hauptpresse, die in Fig. 1 als Kalanderpresse ausgeführt ist, eingeführt.

Die bedampften Fasern gelangen schließlich zur Hauptpresse, die aus einem umlaufenden Stahlband21 und einer dagegen pressenenden Heiztrommel 22 besteht. Hier findet typischerweise die Pressung oberhalb von 150 °C statt, Das umlaufende Band 21 wird über eine Vielzahl von Reifen geführt 23a bis 23c, gespannt 23e und angetrieben 23f. Die Walzen 23a bis 23c und 23f führen das umlaufende Band 21 dabei unter Druck gegen eine große Gegentrommel 22, die zugleich als Heiztrommel dient. Zur Verbesserung der Oberflächenqualität können ferner breitere Stützwalzen 23g zur zusätzlichen Stützung des Bandes 21 um die Heiztrommel herum eingesetzt werden.

Alternativ zur Kalanderpresse können alle andere auf diesem technischen Gebiet einsetzbaren Pressen verwendet werden, beispielsweise eine Doppelbandpresse.

Anschließend wird die zu Platten ausgehärtete Faserfläche 3 mittels einer nicht dargestellten Sägeeinrichtung zersägt und einer Halteeinrichtung zugeführt. In der Halteeinrichtung werden die Platten so gehalten, dass diese sich nicht berühren. Die Platten werden so gekühlt.

Anschließend werden die Platten beispielsweise zu Paneelen weiter verarbeitet. Die Platten werden hierfür beispielsweise mit Papieren geschichtet, weiter zersägt und mit Kupplungselementen durch Fräsen versehen, Die Paneele können als Belag für Wände oder Fußböden dienen.

## Patentansprüche

1. Vorrichtung (1) zum Bedampfen einer mit einer Relativgeschwindigkeit zur Vorrichtung bewegten Fläche (3), mit Dampfaustrittsöffnungen zum Erzeugen eines schräg gegen die Fläche gerichteten Dampfstoßes,
**dadurch gekennzeichnet, dass** die Dampfaustrittsöffnungen an einer Dampfnase/-fläche (11) vorgesehen sind, welche schwenkbar gelagert ist, sodass der Dampfstoß in einem einstellbaren Winkel schräg zur Ebene der Fläche austreten kann.

2. Vorrichtung (1) nach Anspruch 1, **dadurch gekennzeichnet, dass** der Dampfstoß unter einem Winkel entgegen oder mit der Richtung der Bewegung der Fläche (3) austreten kann.

3. Vorrichtung (1) nach einem der vorherigen Ansprüche, **dadurch gekennzeichnet, dass** Dampfaustrittsöffnungen zu beiden Seiten der Fläche (3) vorgesehen sind.

4. Vorrichtung (1) nach einem der vorherigen Ansprüche, **dadurch gekennzeichnet, dass** die Dampfnase/-fläche (11) um eine Achse senkrecht zum Bewegungsvektor der bewegten Fläche (3) und parallel zur Ebene der Fläche schwenkbar ist.

5. Vorrichtung nach einem der vorherigen Ansprüche, **dadurch gekennzeichnet, dass** Bewegungsmittel, insbesondere Elektromotoren, hydraulische oder pneumatische Antriebe, zum Verändern des Winkels des Dampfstoßes an der Vorrichtung vorgesehen sind.

6. Vorrichtung nach einem der vorherigen Ansprüche, **dadurch gekennzeichnet, dass** Bewegungsmittel, insbesondere Computer oder Potentiometer, zum Verändem des Winkels des Dampfstoßes an der Vorrihtung vorgesehen sind.

7. Vorrichtung nach Anspruch 5, **dadurch gekennzeichnet, dass** Steuerungsmittel , insbesondere Computer oder Potentiometer, mit den Bewegungsmitteln verbunden sind.

8. Vorrichtung nach Anspruch 7, **dadurch gekennzeichnet, dass** Steuerungsmittel derart zusammenwirken, dass der Winkel in Abhängigkeit von der Relativgeschwindigkeit und/oder der Dicke der Fläche einstellbar ist.

9. Vorrichtung nach Anspruch 7, **dadurch gekennzeichnet, dass** Steuerungsmittel einen Computer umfasst, auf dem eine Tabelle hinterlegt ist, die eine Zuordnung von verschiedenen Relativgeschwindigkeiten und/oder der Dicke der Fläche zu verschiedenen Winkeln enthält, wobei jeder Relativgeschwindigkeit und/oder jeder Dicke der Fläche ein in Bezug auf einen Arbeitsprozess optimaler Winkel zugeordnet ist.

10. Vorrichtung nach Anspruch 7, **dadurch gekennzeichnet, dass** die Tabelle Zuordnungen enthält, die mittels Versuchen bestimmt wurden.

11. Vorrichtung nach einem der vorherigen Ansprüche, **dadurch gekennzeichnet, dass** dass die Fläche ein Faservlies mit Holzstücken, -dasern, -spänen oder Stägemhl und Bindermitteln zur Herstellung eines vorzugsweise plattenförmigen Bauelements, insbesondere eine Holzfaser-, Holzspan-, MDF- oder HDF-Platte, ist.

12. Vorrichtung nach einem der vorherigen Ansprüche, **dadurch gekennzeichnet, dass** Siebbänder zu beiden Seiten der Fläche zwischen den Dampfaustrittsöffnungen und den Flächen vorgesehen sind, welche an der Fläche anliegen, synchron mit der Fläche geführt sind ist und durch welche der Dampfstoß mit der Fläche wechselwirken kann,

13. Vorrichtung nach Anspruch 12, **dadurch gekennzeichnet, dass** Siebbänder mit einer Maschenweite von 1/199 - 1/50 vorgesehen sind.

14. Vorrichtung nach einem der vorherigen Ansprüche, **dadurch gekennzeichnet, dass** dem Dampf Zusatzstoffe beigegeben sind, die eine Veränderung der Eigenschaften der aus der Fläche durch Pressen hergestellten Platten bewirken, wie z. B. Oberflächenhärte, Trittschalleigenschaften oder Quelleigenschaften.

15. Verwendung der Vorrichtung nach einem der vorherigen Ansprüche als Vorbedampfungseinrichtung bei der Herstellung eines insbesondere plattenförmigen Bauelements, das Holzstücke, -fasern, -späne oder Sägemehl und Bindemittel aufweist, insbesondere einer Holzfaser-, Holzspan-, MDF- oder HDF-Platte.

## Claims

1. Device (1) for vapour deposition of a surface (3) moving at a relative speed in relation to said device, the device comprising vapour outlets for producing a blast of vapour at an inclined angle against the surface, **characterized in that** the vapour outlets are provided on a steam nose/surface (11), which is pivotally mounted, so that the blast of vapour can exit at an adjustable angle inclined to the plane of the surface.

2. Device according to claim 1, **characterized in that** the vapour blast can exit at an angle against or in the direction of movement of the surface (3).

3. Device (1) according to any one of the preceding claims, **characterized in that** vapour outlets are provided on both sides of the surface (3).

4. Device (1) according to any one of the preceding claims, **characterized in that** the steam nose/surface (11) is pivotable around an axis perpendicular to the vector of movement of the moving surface (3) and parallel to the plane of the surface.

5. Device according to any one of the preceding claims, **characterized in that** means for movement, in particular electro motors, hydraulic or pneumatic actuators, are provided to change the angle of the blast of vapour at the device.

6. Device according to any one of the preceding claims **characterized in that** control means, in particular a computer or potentiometer, is provided for changing the angle of the blast of vapour at the device.

7. Device according to claim 5, **characterized in that** control means, in particular computer or potentiometer, are connected with the means for movement.

8. Device according to claim 7, **characterized in that** the control means and the means for movement function together, such that the angle is adjustable dependent on the relative speed and/or the thickness of the surface.

9. Device according to claim 8, **characterized in that** the control means comprise a computer, onto which a table is provided, which comprises a mapping of different relative speeds and/or the thickness of the surface to different angles, wherein each relative speed and/or each thickness of the surface is mapped to an angle, which is optimum in view of the work process.

10. Device according to claim 9, **characterized in that** the table comprises mappings, which were determined by means of experiments.

11. Device according to any one of the preceding claims, **characterized in that** the surface is a fibre web comprising wood particles, fibres, chippings or saw dust as well as binding agents for the production of a preferably plate-like element, in particular a wood fibre, wood chip, MDF or HDF board.

12. Device according to any one of the preceding claims, **characterized in that** filter bands are arranged on both sides of the surface between the vapour outlets and the surfaces, which touch the surface and are moved synchronously with the surface and through which the blast of vapour can interact with the surface.

13. Device according to claim 12, **characterized in that** filter bands with a mesh size of 1/199 to 1/50 are provided.

14. Device according to any one of the preceding claims, **characterized in that** additives are given to the vapour, which provide a change of the properties of the boards being manufactured by pressing from the surface, as for example surface hardness, step sound properties or swelling properties.

15. Use of the device according to any one of the preceding claims as pre-vaporizing device in the manufacturing of a in particular board-like element, which comprises wood particles, fibres, chips or saw dust and a binding agent, in particular a wood fibre, wood chip, MDF or HDF board.

## Revendications

1. Dispositif (1) de vaporisation d'une surface (3) déplacée à une vitesse relative par rapport au dispositif, comportant des ouvertures de sortie de vapeur pour générer un coup de vapeur dirigé contre la surface,
**caractérisé en ce que** les ouvertures de sortie de vapeur sont prévues sur une saillie/surface à vapeur (11) montée avec faculté de pivoter, de telle sorte que le coup de vapeur puisse sortir sous un angle réglable en oblique par rapport au plan de la surface.

2. Dispositif (1) selon la revendication 1, **caractérisé en ce que** le coup de vapeur peut sortir sous un angle en sens opposé ou dans le sens du mouvement de la surface (3).

3. Dispositif (1) selon l'une des revendications précédentes, **caractérisé en ce qu'**il est prévu des ouvertures de sortie de vapeur de part et d'autre de la surface (3).

4. Dispositif (1) selon l'une des revendications précédentes, **caractérisé en ce que** la saillie/surface de vapeur (11) est apte à pivoter autour d'un axe perpendiculairement au vecteur de mouvement de la surface déplacée (3) et parallèlement au plan de la surface.

5. Dispositif selon l'une des revendications précédentes, **caractérisé en ce que** des moyens de déplacement, en particulier des moteurs électriques, des entraînements hydrauliques ou pneumatiques, destinés à modifier l'angle du coup de vapeur, sont prévus sur le dispositif.

6. Dispositif selon l'une des revendications précédentes, **caractérisé en ce que** des moyens de commande, en particulier des ordinateurs ou des potentiomètres, destinés à modifier l'angle du coup de vapeur, sont prévus sur le dispositif

7. Dispositif selon la revendication 5, **caractérisé en ce que** des moyens de commande, en particulier des ordinateurs ou des potentiomètres, sont connectés aux moyens de déplacement.

8. Dispositif selon la revendication 7, **caractérisé en ce que** les moyens de commande et les moyens de déplacement coopèrent de telle sorte que l'angle est réglable en fonction de la vitesse relative et/ou de l'épaisseur de la surface.

9. Dispositif selon la revendication 8, **caractérisé en ce que** le moyen de commande comprend un ordinateur dans lequel est mémorisé un tableau qui comprend une affectation de différentes vitesses relatives et/ou de l'épaisseur de la surface à différents angles, chaque vitesse relative et/ou chaque épaisseur de la surface étant affectée d'un angle qui est optimal par rapport à un processus de travail.

10. Dispositif selon la revendication 9, **caractérisé en ce que** le tableau comprend des affectations déterminées par voie expérimentale.

11. Dispositif selon l'une des revendications précédentes, **caractérisé en ce que** la surface est une nappe de fibres à morceaux de bois, fibres de bois, copeaux de bois ou à sciure de bois et à liants en vue de réaliser un élément de construction de préférence en forme de panneau, en particulier un panneau à fibres de bois, copeaux de bois, MDF ou HDF.

12. Dispositif selon l'une des revendications précédentes, **caractérisé en ce qu'**il est prévu des tamis sans fin de part de d'autre de la surface entre les ouvertures de sortie de vapeur et les surfaces, qui sont en appui contre la surface, guidés de façon synchrone avec la surface et à travers lesquels le coup de vapeur est apte à interagir avec la surface.

13. Dispositif selon la revendication 12, **caractérisé en ce qu'**il est prévu des tamis sans fin avec un maillage de 1/199 à 1/50.

14. Dispositif selon l'une des revendications précédentes, **caractérisé en ce que** des additifs sont ajoutés à la vapeur, qui procurent une modification des propriétés des panneaux fabriqués par pressage à partir de la surface, comme par exemple la dureté de la surface, les propriétés vis-à-vis des bruits d'impact ou les propriétés de gonflement.

15. Utilisation du dispositif selon l'une des revendications précédentes à titre de système de vaporisation préalable lors de la fabrication d'un élément de construction en particulier en forme de panneau, qui comprend des morceaux de bois, des fibres de bois, des copeaux de bois ou de la sciure de bois et des liants, en particulier d'un panneau à fibres de bois, copeaux de bois, MDF ou HDF.
